# EUROPEAN PATENT SPECIFICATION

(11) **EP 2 380 779 B1**
(45) Date of publication and mention of the grant of the patent: **25.12.2013**
(21) Application number: 11163310.3
(22) Date of filing: 20.04.2011
(51) Int. Cl.: B60R 11/02

(54) **A mounting device**
Montiervorrichtung
Dispositif d'assemblage

(30) Priority: 20.04.2010 GB 201006560
(43) Date of publication of application: 26.10.2011
(73) Proprietor: Banks, Graham, Hertfordshire EN4 8AL (GB); Smith, Gary, Hertfordshire EN4 8AL (GB)
(72) Inventor: Banks, Graham, Hertfordshire EN4 8AL (GB); Smith, Gary, Hertfordshire EN4 8AL (GB)
(74) Representative: Instone, Alicia Claire

(56) References cited:
- WO-A1-2006/135215
- WO-A2-2009/084882
- DE-A1- 19 614 781
- US-A1- 2007 223 726
- US-A1- 2007 278 274
- US-B1- 6 473 302

## Description

### Field of the Invention

The present invention relates to a mounting device for retaining an object. It is particularly applicable to a mounting device for retaining an object in a vehicle such as a car, van or lorry, particularly one which has a CD or cassette player.

### Background of the Invention

Many attempts have been made to mount objects such as portable satellite navigation units, mobile phones and beverage containers in vehicles. The mounting of these objects particularly on modern vehicle dashboards such that they are still useable and reachable by the driver and/or passenger is often challenging due to the sleek uncompromising design of such dashboards. It is important that such objects are mounted safely, and many have turned to mounting such objects onto the vehicle windscreen.

Mounting devices for mounting to a vehicle windscreen generally consist of a mounting surface for mounting the object in question connected to a suction mount which then affixes to the window. There are, however, many problems with such an arrangement. Firstly there is a question as to whether the mounting of the device to the vehicle window is in fact safe, as there is an argument that such mounting is contrary to the highway code. The highway code states that "windscreens and windows must be kept clean and clear of all obstructions", and thus such mounting devices may be seen as being contrary to this statement. Another problem is that vehicle windscreens can often be some distance away from the driver with a steep raked angle to the dashboard. Fixing and removal after each journey, by an able bodied person can be difficult and potentially impossible for a physically disabled driver. Furthermore any required operation of the object mounted on the windscreen is not possible as the object is not within convenient reach of the driver and/or passenger, in the event that the object is not permitted to be operated by the driver. Another issue is the glare of the sun on the object which is particularly a problem when the object to be mounted is a portable satellite navigation unit or a mobile phone with satellite navigation capabilities. Such objects need their screens to be clearly visible during use in the vehicle so that the directions they are providing are clearly visible by the driver, which is not the case when the screens are being obscured by the glare of the sun. There is also an unresolved final issue with window suction mounts that police forces are endeavouring to combat. The window suction mount often leaves visible rings on the windscreen advertising to potential criminals that a portable satellite navigation unit may be present in the vehicle.

An alternative method of mounting an object in a vehicle on the dashboard is via a vent-mounting device. Such mounting devices for mounting to a vehicle vent generally consist of a mounting surface for mounting the object in question connected to a vent mount. The vent mount generally consists of a protrusion a little wider than the gap between standard vehicle vents formed from a construction adapted to reduce in width to a little narrower than the gap between standard vehicle vents on insertion into the vent, which expands to its original size after insertion into the vent. Although such devices are relatively straight forward to fit, they are often difficult to remove after each journey as the protrusion is not as readily adaptable to the vent size. This is so that the device does not accidentally become dislodged in use, but also results in the feeling that the mounting device might break on removal. It is generally considered important that the mounting device is removed from view whilst not in use so that it does not advertise to potential criminals that a portable satellite navigation unit may be present in the vehicle. Another problem with this particular mounting device is that it is only possible to mount the device in pre-existing vents in the car dashboard, which may not be in convenient locations to overcome problems such as ease of sight of the object mounted in the device and ease of manipulation thereof.

A further problem with both windscreen suction mounting devices and vent mounting devices is the location of the object if it is required to be powered by the cigarette lighter in a vehicle or connected to the vehicle's audio system. If the mounting is not in or around the central console of the dashboard, devices such as vent and window suction mounts in particular can result in trailing wires across the driver which may be hazardous.

US2007/0278274 (Dunn) describes a mounting apparatus for portable electronic devices that allows the user to use and store their device in a CD slot of a motor vehicle which needs to be screwed and unscrewed to be located into position using an expanding tongue configuration.

### Summary of the Invention

According to a first aspect of the present invention there is provided a mounting device including a retaining means adapted to retain an object and a mounting means adapted to mount to an entertainment system in a vehicle wherein the mounting means includes a projection and the projection includes a tongue characterised in that the tongue in the direction of projection includes a first horizontal portion, a second portion which curves below the horizontal portion and a third portion which curves back to the level of the horizontal portion wherein the second a third portions create a wave portion wherein the wave portion is adapted to mount within and be retain with the receiving aperture in a hook like manner.

This provides the means for mounting a device which is able to retain an object such as a portable satellite navigation unit, mobile phone, mp3 player or even a beverage container such as a cup in the same position and location as the entertainment system in a vehicle. In general, in vehicles, the entertainment system is located in a position easily accessible and operable by the driver. As such any objects mounted in the same location should also be easily accessible operable and capable of being removed efficiently and easily by the driver and or passenger at the start and end of each journey. This is advantageous as it allows for the mounting means to be more securely held in place within the relevant aperture than a straight tongue. This results in a mounting device which is installed in position in the relevant aperture by firstly tilting the mounting device upwards away from the horizontal plane such that the end of the tongue portion which will enter the relevant receiving aperture first is tipped down. This third portion of the tongue will enter first into the relevant receiving aperture. The mounting device will then be tilted downwards to below horizontal for the second portion of the tongue to enter the relevant receiving aperture and finally the mounting device will be tilted back to horizontal for the first portion to enter the relevant receiving aperture. The resulting peak and trough of the wave portion will act to contact the upper and lower surfaces of the relevant receiving channel inside the relevant player securing the mounting device in place. To uninstall the mounting device the reverse manoeuvre is simply completed.

If the object requires power from the vehicle it is also usually the case that the power point, in most circumstances in the form of a cigarette lighter, is also present around the same place, generally in the centre console near the entertainment system. This is therefore particularly suitable for objects such as portable satellite navigation unit, mobile phones (in hands free or navigation mode) and mp3 players which may need power and may also need to be operated by the driver and or passenger in the course of a road journey in the same way that the driver and or passenger might operate the entertainment system.

Further because the entertainment system is the favoured location of pre installed manufacturer's satellite navigation and mobile phone technology. Generally located in a centralized dashboard position of a car, van or lorry, for those objects which have a screen such as portable satellite navigation unit, mobile phone (in hands free or navigation mode) and mp3 players there is less risk of glare from the sun on the screen which would normally affect the visibility by the driver of the information being displayed on the screen.

Also because the object such as a portable satellite navigation unit, mobile phone (in hands free or navigation mode) or mp3 player is usually located centrally in the dashboard of the vehicle away from the windscreen the visibility of the environment external to the vehicle by the driver is not compromised in the way that screen mounts often compromise visibility by blocking the driver's view. Further in addition, which is particularly applicable at night time, the bright screen of objects such as portable satellite navigation unit, mobile phone (in hands free or navigation mode) and mp3 players is not in the line of sight of the driver so that the driver's night vision is not compromised. In addition it means that the bright screen of objects such as portable satellite navigation unit, mobile phone (in hands free or navigation mode) and mp3 players is not visible to other road users and possibly criminals.

Preferably the mounting means includes a projection and the projection includes a tongue. This enables the mounting devices to be mounted within pre-existing apertures located on the entertainment system

In one alternative the entertainment system may include a CD player including a CD receiving aperture, a CD receiving channel and a CD playing station. In this case the mounting means would preferably be adapted to mount within and be retained within the CD receiving aperture, such that the mounting means is adapted to extend into the CD receiving channel but not into the CD playing station. This is particularly advantageous as not only is a mounting device provided which is readily installable and removable from its installed position without fear of breaking the mounting device or leaving a trace that the mounting device (and thus the object retained by the mounting device) was ever installed in the vehicle. It also provides for the mounting in a pre-existing aperture being the CD receiving aperture, but without affecting the playing of a CD already located at the CD playing station within the CD player.

In another alternative the entertainment system may include a DVD player including a DVD receiving aperture, a DVD receiving channel and a DVD playing station. In this case the mounting means would preferably be adapted to mount within and be retained within the DVD receiving aperture, such that the mounting means is adapted to extend into the DVD receiving channel but not into the DVD playing station. This is particularly advantageous as not only is a mounting device provided which is readily installable and removable from its installed position without fear of breaking the mounting device or leaving a trace that the mounting device (and thus the object retained by the mounting device) was ever installed in the vehicle. It also provides for the mounting in a pre-existing aperture being the DVD receiving aperture, but without affecting the playing of a DVD already located at the DVD playing station within the DVD player.

In yet another alternative the entertainment system may include a cassette player including a cassette receiving aperture, a cassette receiving channel and a cassette playing station. In this case the mounting means would preferably be adapted to mount within and be retained within the cassette receiving aperture, such that the mounting means is adapted to extend into the cassette receiving channel but not into the cassette playing station. This is particularly advantageous as not only is a mounting device provided which is readily installable and removable from its installed position without fear of breaking the mounting device or leaving a trace that the mounting device (and thus the object retained by the mounting device) was ever installed in the vehicle. It also provides for the mounting in a pre-existing aperture being the cassette receiving aperture, but without affecting the playing of a cassette already located at the cassette playing station within the cassette player.

Preferably the mounting device does not interfere with the normal operations of the entertainment system in a vehicle. The operation of the CD, DVD or cassette is not affected when the mounting device is installed because when a CD, DVD or cassette is inserted into the relevant player through the relevant receiving aperture it is taken by the player through the receiving channel quite a distance inside the player to the relevant playing station. There is therefore a gap or channel between the receiving aperture and the final relevant playing station where the CD, DVD or cassette is actually operated and played. The present invention takes opportunity of this already present gap or channel as a perfect location for mounting a mounting device which is adapted to retain an object such as a portable satellite navigation unit, mobile phone (in hands free or navigation mode), mp3 player or even a beverage container such as a cup.

Preferably in order to further ensure that the tongue does not enter into the relevant playing station the tongue is curved to match the curvature of the CD or DVD and thus the CD or DVD playing station. This in effect means that the tongue enters into the relevant receiving gap or channel further at the two edges of the tongue and much less in the middle of the tongue.

The retaining means may include an aperture, a clip, a hook and loop fastener system, a retaining projection, a bracket or any other suitable retaining means. Further in the alternative the retaining means may include a layer of plastics material with increased frictional properties on its first and second surfaces adapted to retain itself to the mounting device with its first surface and retain any object placed on it with its second surface. The retaining means may include a low tac adhesive plastics material. Further in the alternative the retaining means may include a suction cup.

The retaining means may be adapted to retain a cup, a portable satellite navigation unit, a mobile phone (in hands free or navigation mode), an mp3 player or any other portable device as desired by the driver which the driver may need access to during the drive.

In a further alternative the retaining means is substantially perpendicular to the mounting means. In anther alternative the retaining means is angled at 30 to 60 degrees relative to the mounting means, preferably the retaining means is angled at 45 degrees relative to the mounting means.

According to another aspect of the present invention there is provided a method of manufacturing a mounting means as described above by injection moulding, preferably the mounting means is of unitary construction.

According to a further aspect of the present invention there is provided a mounting system including a mounting device as described above and a CD player.

According to a yet another aspect of the present invention there is provided a mounting system including a mounting device as described above and a DVD player.

According to a further aspect of the present invention there is provided a mounting system including a mounting device as described above and a cassette player.

### Brief Description of the Drawings

A preferred embodiment of the present invention will now be more particularly described, by way of example, with reference to the accompanying drawings, wherein:
Figure 1 is a right side view of a mounting device according to a first embodiment of the present invention;
Figure 2 is a rear right side perspective view of a mounting device according to a first embodiment of the present invention;
Figure 3 is a rear view of a mounting device according to a first embodiment of the present invention;
Figure 4 is a rear left side perspective view of a mounting device according to a first embodiment of the present invention;
Figure 5 is a left side view of a mounting device according to a first embodiment of the present invention;
Figure 6 is a front left side perspective view of a mounting device according to a first embodiment of the present invention;
Figure 7 is a front view of a mounting device according to a first embodiment of the present invention;
Figure 8 is a front right side perspective view of a mounting device according to a first embodiment of the present invention;
Figure 9 is a top view of a mounting device according to a first embodiment of the present invention;
Figure 10 is a top view of a mounting device according to a first embodiment of the present invention in situ mounted in a CD player showing the internal components of the CD player;
Figure 11 is a front view of a mounting device according to a first embodiment of the present invention in situ mounted in a CD player;
Figure 12 is a right side view of a mounting device according to a first embodiment of the present invention including an mp3 player retained by the retaining means;
Figure 13 is a rear right side perspective view of a mounting device according to a first embodiment of the present invention including an mp3 player retained by the retaining means;
Figure 14 is a rear view of a mounting device according to a first embodiment of the present invention including an mp3 player retained by the retaining means;
Figure 15 is a rear left side perspective view of a mounting device according to a first embodiment of the present invention including an mp3 player retained by the retaining means;
Figure 16 is a left side view of a mounting device according to a first embodiment of the present invention including an mp3 player retained by the retaining means;
Figure 17 is a front left side perspective view of a mounting device according to a first embodiment of the present invention including an mp3 player retained by the retaining means;
Figure 18 is a front view of a mounting device according to a first embodiment of the present invention including an mp3 player retained by the retaining means;
Figure 19 is a front right side perspective view of a mounting device according to a first embodiment of the present invention including an mp3 player retained by the retaining means;
Figure 20 is a top view of a mounting device according to a first embodiment of the present invention including an mp3 player retained by the retaining means;
Figure 21 is a left top side perspective view of a mounting device according to a first embodiment of the present invention including an mp3 player retained by the retaining means;
Figure 22 is a top perspective view of a mounting device according to a first embodiment of the present invention including an mp3 player retained by the retaining means;
Figure 23 is a right top side perspective view of a mounting device according to a first embodiment of the present invention including an mp3 player retained by the retaining means;
Figure 24 is a right side view of a mounting device according to a second embodiment of the present invention;
Figure 25 is a rear right side perspective view of a mounting device according to a second embodiment of the present invention;
Figure 26 is a rear view of a mounting device according to a second embodiment of the present invention;
Figure 27 is a rear left side perspective view of a mounting device according to a second embodiment of the present invention;
Figure 28 is a left side view of a mounting device according to a second embodiment of the present invention;
Figure 29 is a front left side perspective view of a mounting device according to a second embodiment of the present invention;
Figure 30 is a front view of a mounting device according to a second embodiment of the present invention;
Figure 31 is a front right side perspective view of a mounting device according to a second embodiment of the present invention;
Figure 32 is a top view of a mounting device according to a second embodiment of the present invention;
Figure 33 is a right side view of a mounting device according to a second embodiment of the present invention including a cup retained by the retaining means;
Figure 34 is a rear right side perspective view of a mounting device according to a second embodiment of the present invention including a cup retained by the retaining means;
Figure 35 is a rear view of a mounting device according to a second embodiment of the present invention including a cup retained by the retaining means;
Figure 36 is a rear left side perspective view of a mounting device according to a second embodiment of the present invention including a cup retained by the retaining means;
Figure 37 is a left side view of a mounting device according to a second embodiment of the present invention including a cup retained by the retaining means;
Figure 38 is a front left side perspective view of a mounting device according to a second embodiment of the present invention including a cup retained by the retaining means;
Figure 39 is a front view of a mounting device according to a second embodiment of the present invention including a cup retained by the retaining means;
Figure 40 is a front right side perspective view of a mounting device according to a second embodiment of the present invention including a cup retained by the retaining means;
Figure 41 is a top view of a mounting device according to a second embodiment of the present invention including a cup retained by the retaining means;
Figure 42 is a front top perspective view of a mounting device according to a third embodiment of the present invention;
Figure 43 is a top perspective view of a mounting device according to a third embodiment of the present invention;
Figure 44 is a side top perspective view of a mounting device according to a third embodiment of the present invention;
Figure 45 is a side top perspective view of a mounting device according to a third embodiment of the present invention;
Figure 46 is a side top perspective view of a mounting device according to a third embodiment of the present invention;
Figure 47 is a bottom perspective view of a mounting device according to a third embodiment of the present invention;
Figure 48 is a side view of a mounting device according to a third embodiment of the present invention;
Figure 49 is a side top perspective view of a mounting device according to a third embodiment of the present invention mounted in a CD player with a mobile phone retained by the retaining means;
Figure 50 is a side top perspective view of a mounting device according to a third embodiment of the present invention mounted in a CD player with an mp3 player retained by the retaining means; and
Figure 51 is a side top perspective view of a mounting device according to a third embodiment of the present invention mounted in a CD player with a satellite navigation system retained by the retaining means.

### Description of Preferred Embodiment

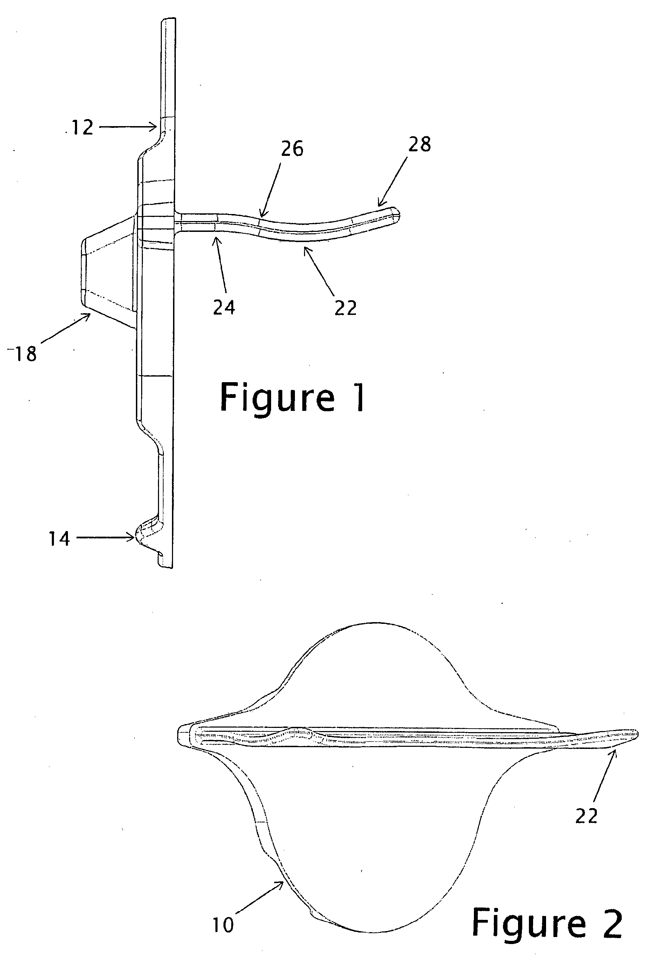

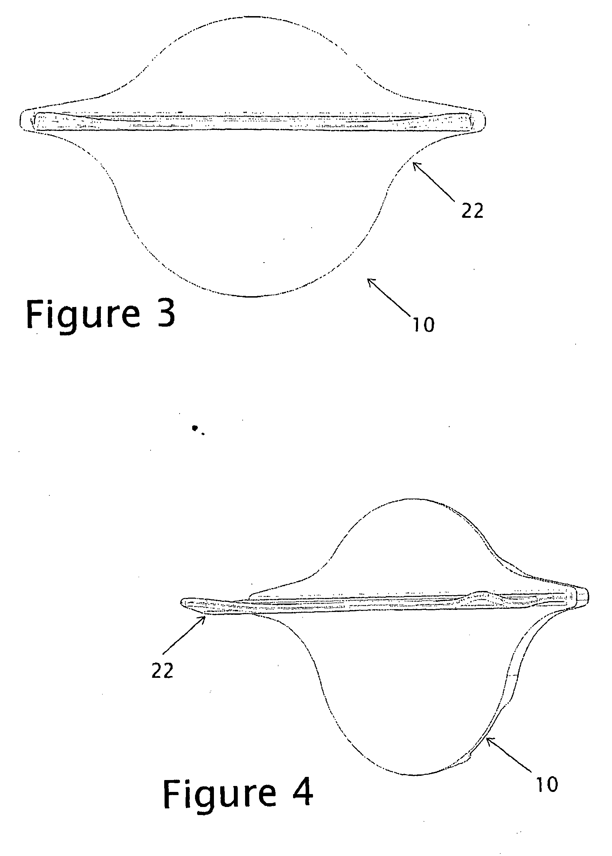

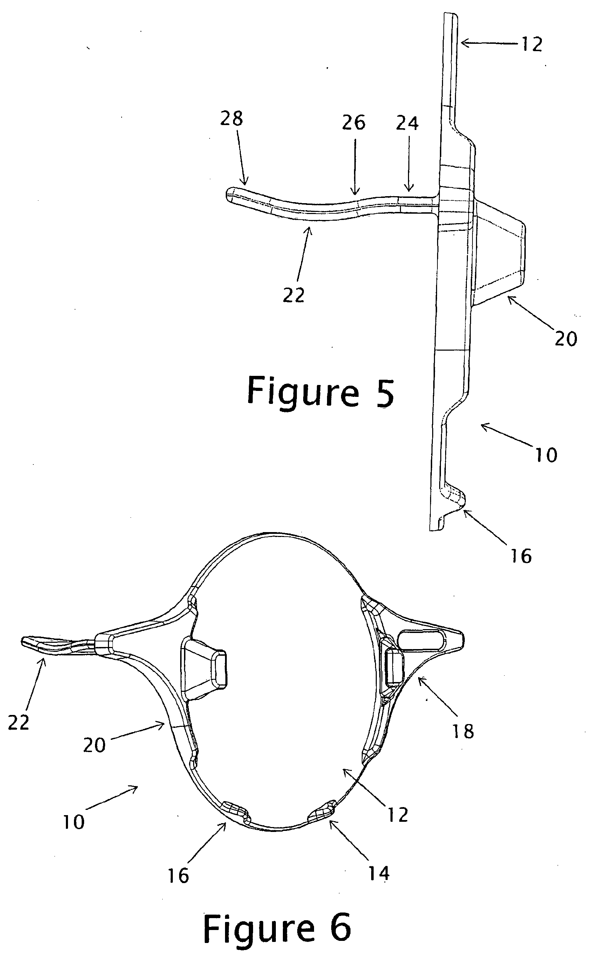

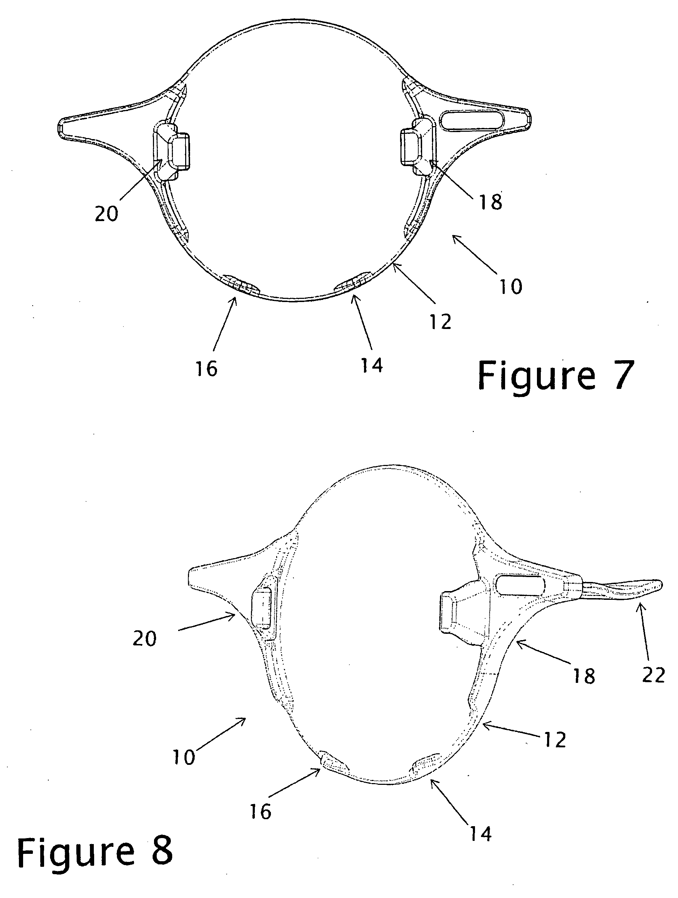

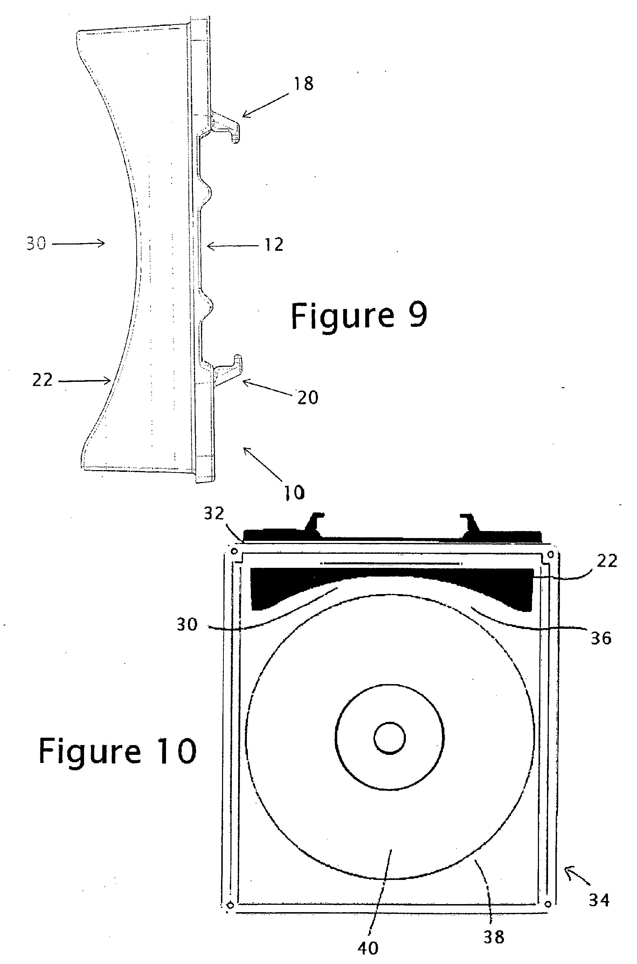

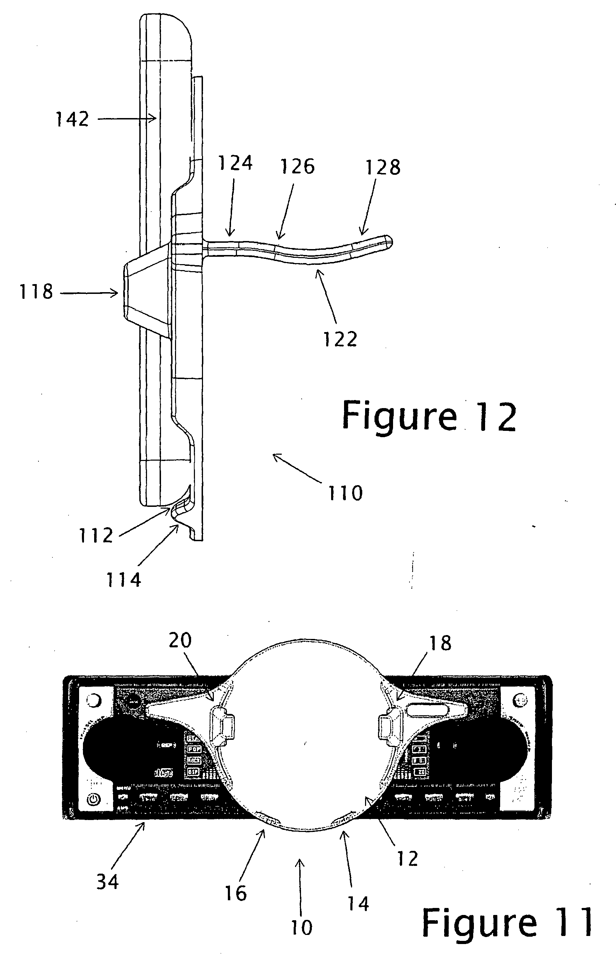

Figures 1 to 9 illustrate a mounting device 10 according to a first embodiment of the present invention from a number of different perspective angles. The mounting device 10 has a retaining means which is made up of a retaining surface 12, lower retaining brackets 14, 16 and side retaining projections 18, 20. The retaining means as a whole acts to retain an object. The mounting device also has a tongue projection 22 which is made up of a first portion 24, second portion 26 and third portion 28. The tongue projection 22 has an arcuate cut away portion 30 which substantially conforms to the arcuate of a CD or DVD. The cut away portion 30 enables the tongue projection 22 to fit into the receiving aperture 32 of a CD or DVD player 34 without protruding too far into the CD or DVD player 34 in the receiving channel 36 so that the tongue does not interfere with the CD or DVD playing station 38 and thus the actual playing of the CD or DVD 40 whilst the mounting device 10 is installed. This arrangement can be more clearly seen in Figures 10 and 11.

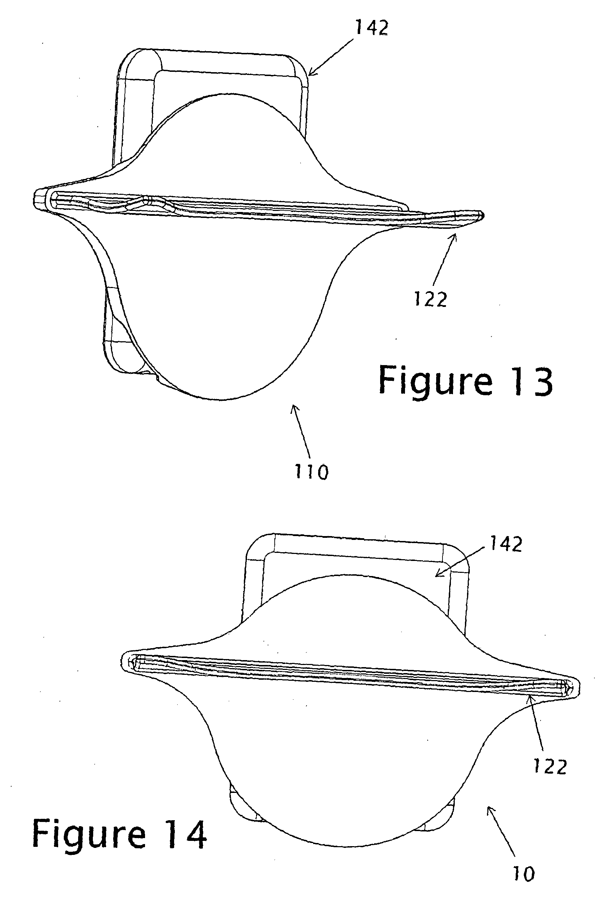

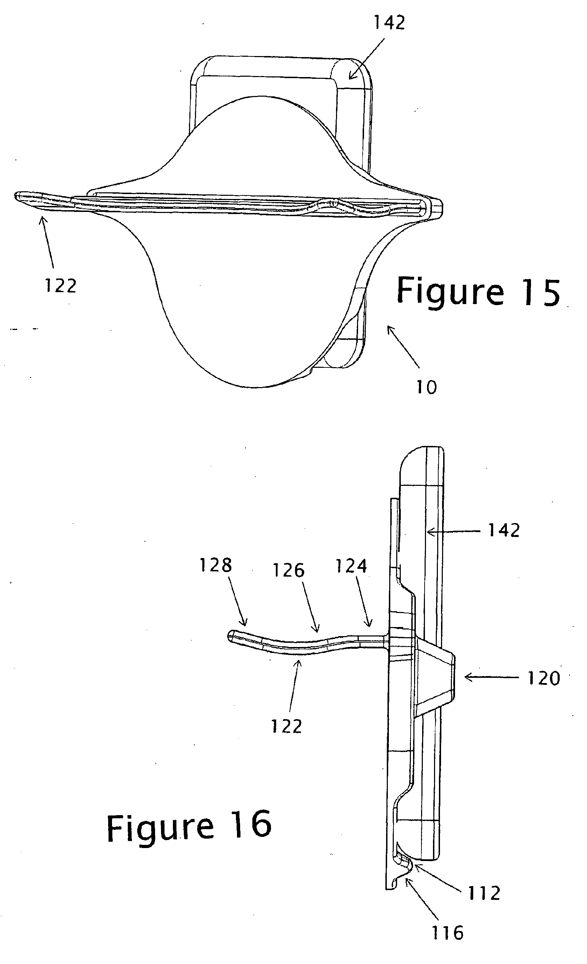

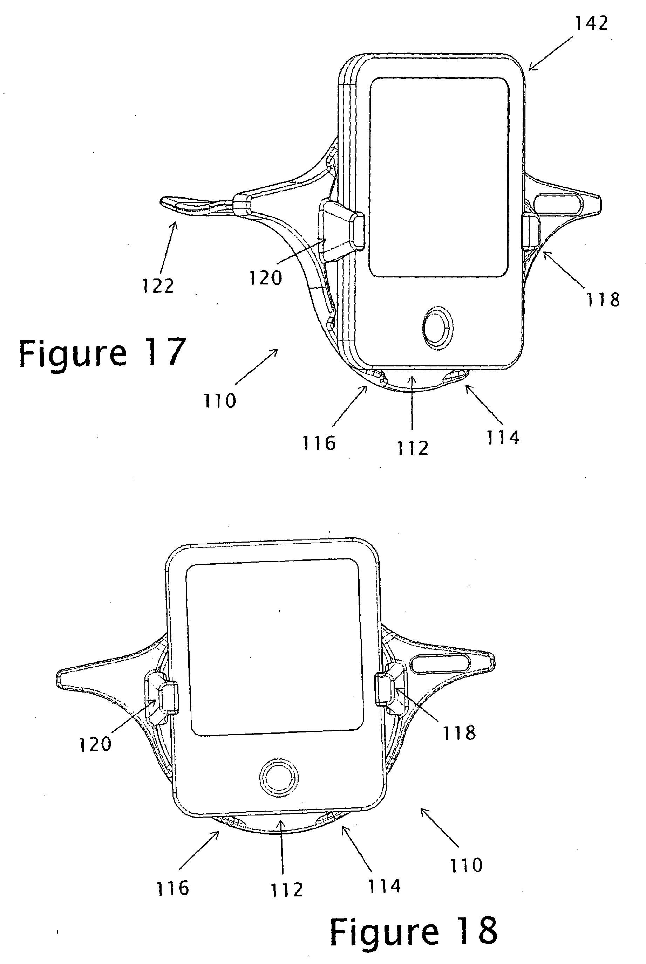

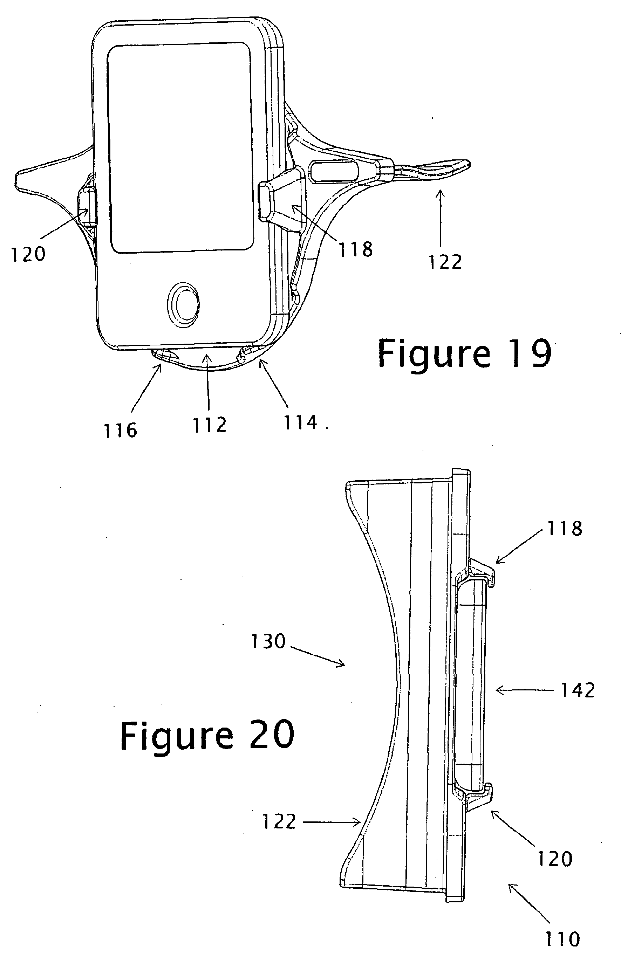

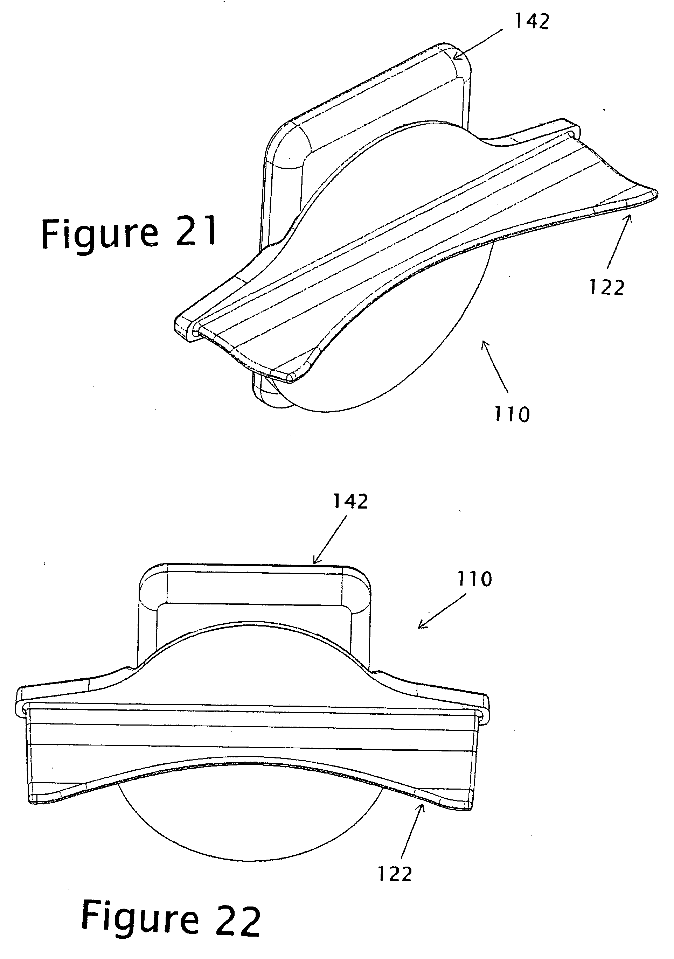

Figures 12 to 23 illustrate a mounting device 110 according to a first embodiment of the present invention from a number of different perspective angles with an example mp3 player in situ. The mounting device 110 has a retaining means which is made up of a retaining surface 112, lower retaining brackets 114, 116 and side retaining projections 118, 120. The retaining means as a whole acts to retain the mp3 player 142. The mounting device also has a tongue projection 122 which is made up of a first portion 124, second portion 126 and third portion 128. The tongue projection 122 has an arcuate cut away portion 130 which substantially conforms to the arcuate of a CD or DVD.

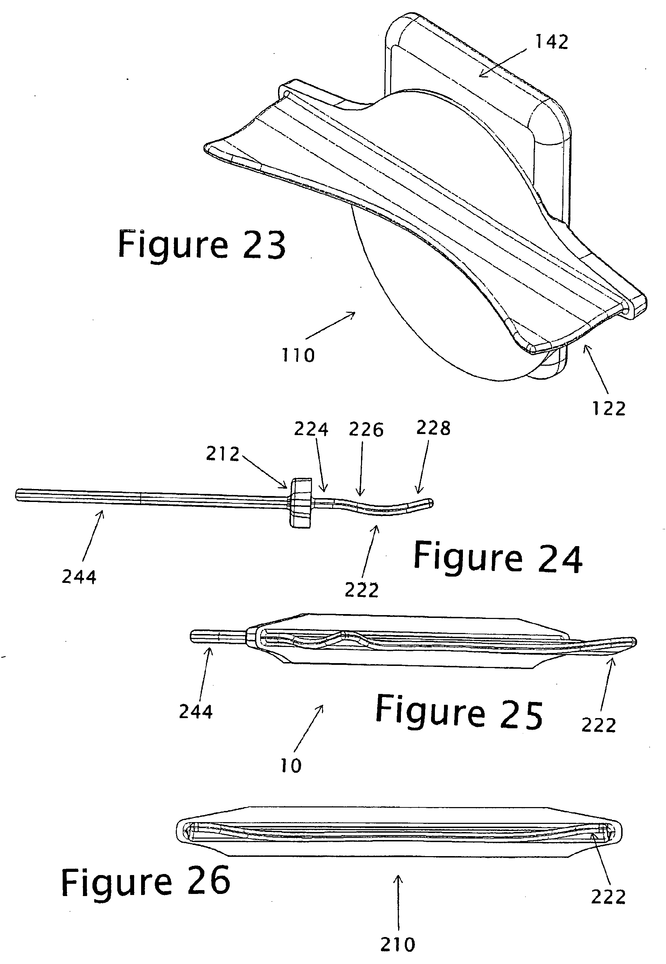

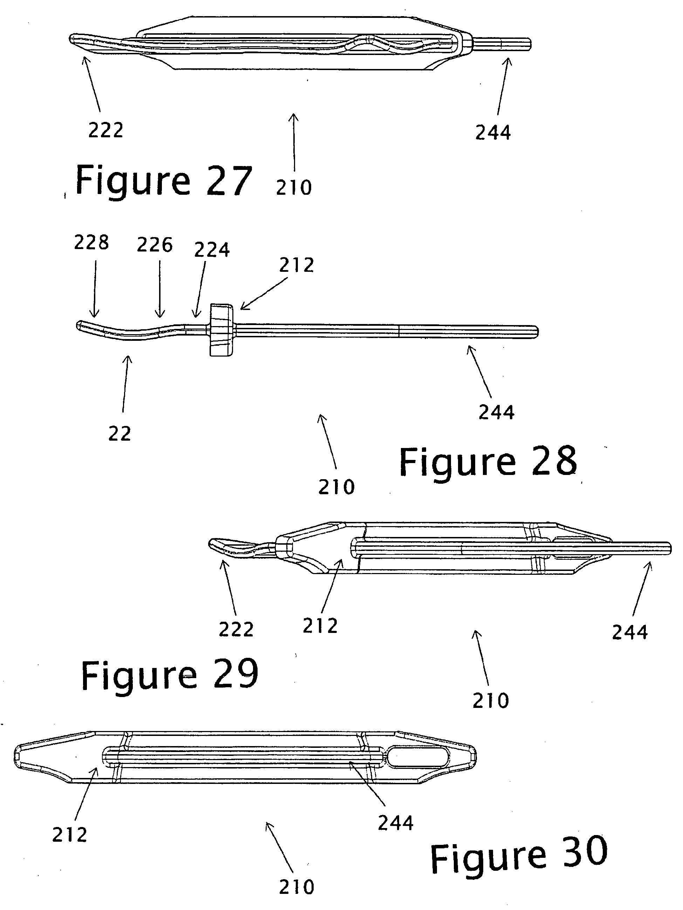

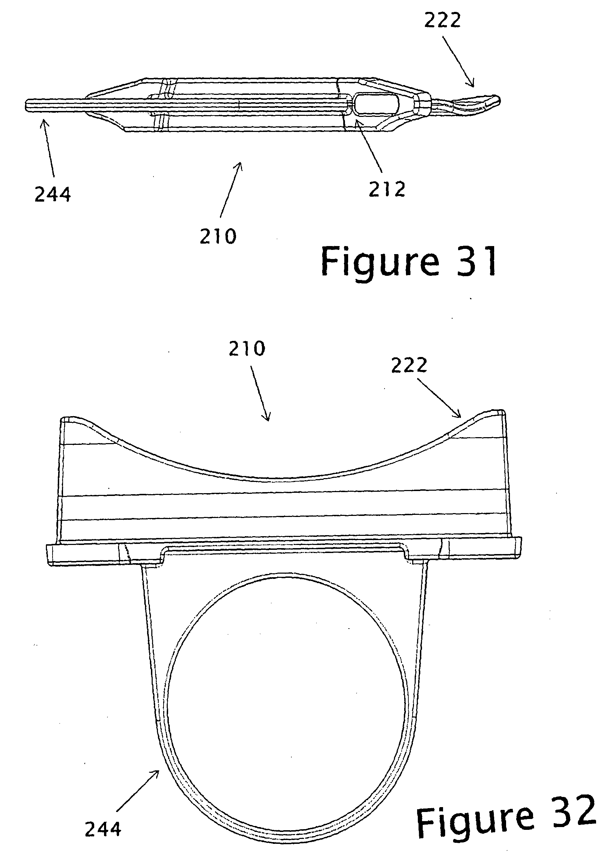

Figures 24 to 32 illustrate a mounting device 210 according to second embodiment of the present invention from a number of different perspective angles. The mounting device 210 has a retaining means which is made up of a retaining surface 212 and a retaining ring 244 and retaining aperture 246 extending there from. The retaining aperture 246 is adapted to retain a beverage container such as a cup. The retaining means as a whole acts to retain an object. The mounting device also has a tongue projection 222 which is made up of a first portion 224, second portion 226 and third portion 228. The tongue projection 222 has an arcuate cut away portion 230 which substantially conforms to the arcuate of a CD or DVD.

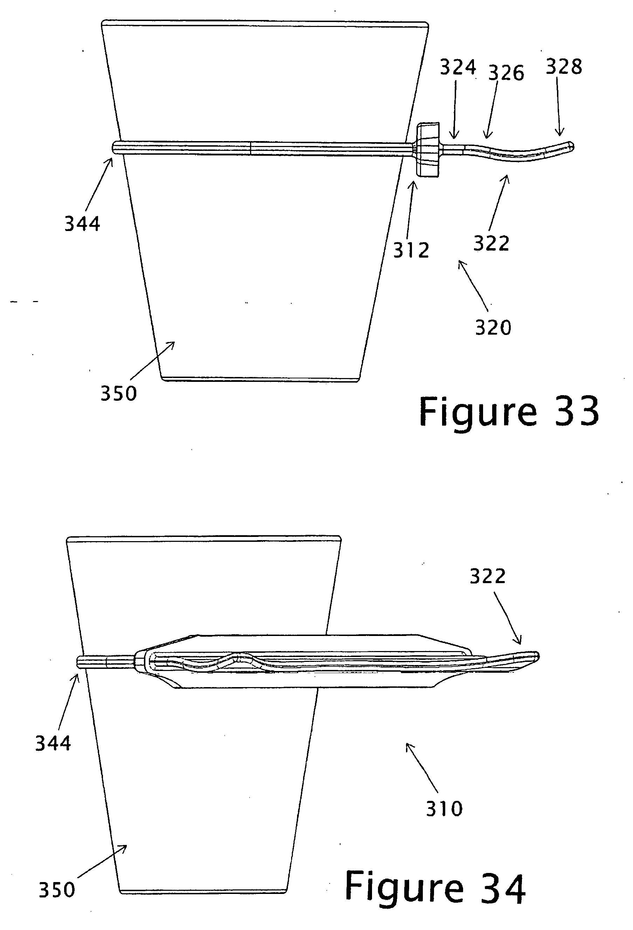

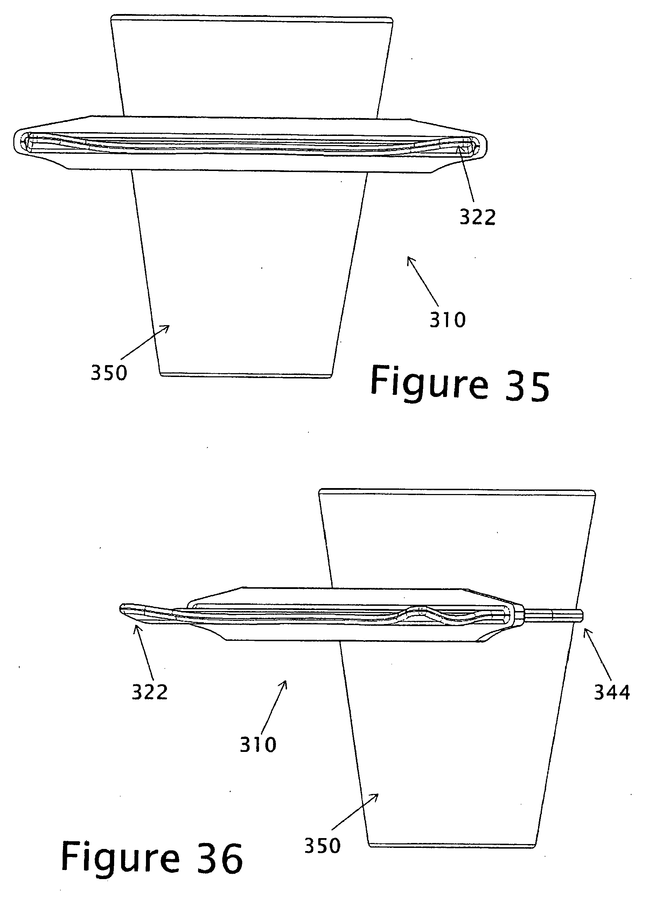

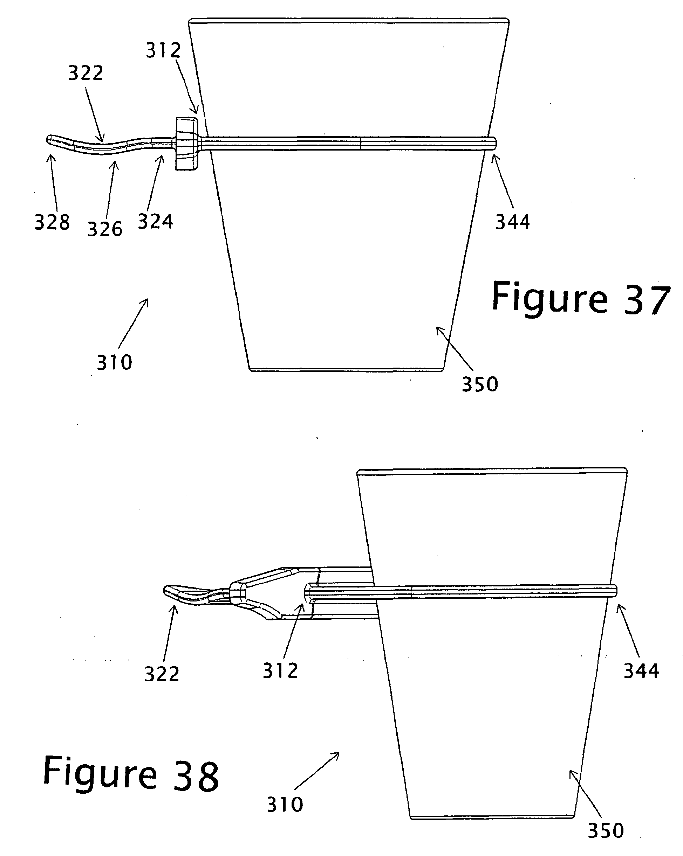

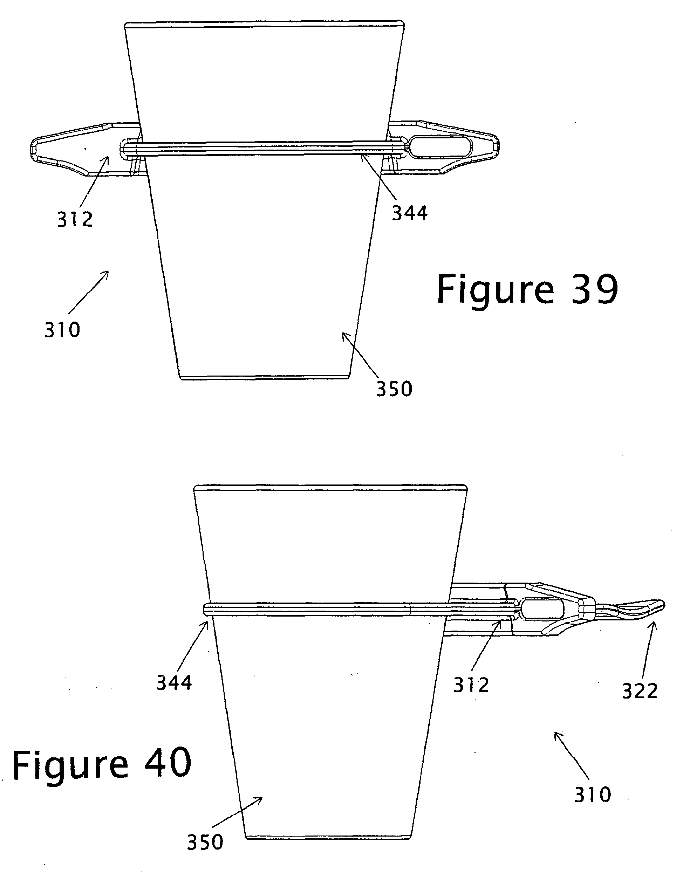

Figures 33 to 41 illustrate a mounting device 310 according to a second embodiment of the present invention from a number of different perspective angles with an example cup 350 in situ. The mounting device 310 has a retaining means which is made up of a retaining surface 312 and a retaining ring 344 and retaining aperture 346 extending there from. The retaining aperture 346 is adapted to retain a beverage container such as a cup. The retaining means as a whole acts to retain an object. The mounting device also has a tongue projection 322 which is made up of a first portion 324, second portion 326 and third portion 328. The tongue projection 322 has an arcuate cut away portion 330 which substantially conforms to the arcuate of a CD or DVD.

The mounting device 10, 110, 210, 310 in all embodiments described above is formed from an injection molded plastics material in a unitary component. In the alternative the mounting device 10, 110, 210, 310 may be formed from 2 or more injection molded plastics components. Further in the alternative the mounting device 10, 110, 210, 310 may be formed from vacuum moulding 2 or more plastics components.

The mounting device does not interfere with the normal operations of the entertainment system in a vehicle. The operation of the CD, DVD or cassette is not affected when the mounting device is installed because when a CD, DVD or cassette is inserted into the relevant player through the relevant receiving aperture it is taken by the player through the receiving channel quite a distance inside the player to the relevant playing station. There is therefore a gap or channel between the receiving aperture and the final relevant playing station where the CD, DVD or cassette is actually operated and played. The present invention takes opportunity of this already present gap or channel as a perfect location for mounting a mounting device which is adapted to retain an object such as a portable satellite navigation unit, mobile phone (in hands free or navigation mode), mp3 player or even a beverage container such as a cup.

The tongue projection 22, 122, 222, 322 in all embodiments includes a first horizontal portion 24, 134, 234, 334, a second portion 26, 136, 236, 336 which curves below the horizontal portion and a third portion 28, 138, 238, 338 which curves back to the level of the horizontal portion wherein the second and third portions create a wave portion. The wave portion is adapted to mount within and be retained within the receiving aperture of the CD, DVD or cassette player in a hook like manner. This results in a mounting device which is installed in position in the relevant aperture by firstly tilting the mounting device 10, 110, 210, 310 upwards away from the horizontal plane such that the end of the tongue projection 22, 122, 222, 322 which will enter the relevant receiving aperture first is tipped down. This third portion 28, 138, 238, 338 of the tongue 22, 122, 222, 322 will enter first into the relevant receiving aperture. The mounting device 10, 110, 210, 310 will then be tilted downwards to below horizontal for the second portion of the tongue to enter the relevant receiving aperture and finally the mounting device will be tilted back to horizontal for the first portion to enter the relevant receiving aperture. The resulting peak and trough of the wave portion will act to contact the upper and lower surfaces of the relevant receiving channel inside the relevant player securing the mounting device in place. To uninstall the mounting device the reverse manoeuvre is simply completed.

To ensure that the tongue 22, 122, 222, 322 does not enter into the relevant playing station the tongue 22, 122, 222, 322 has an arcuate cut away portion which is curved to match the curvature of the CD or DVD and thus the CD or DVD playing station. This in effect means that the tongue 22, 122, 222, 322 enters into the relevant receiving gap or channel further at the two edges of the tongue and much less in the middle of the tongue.

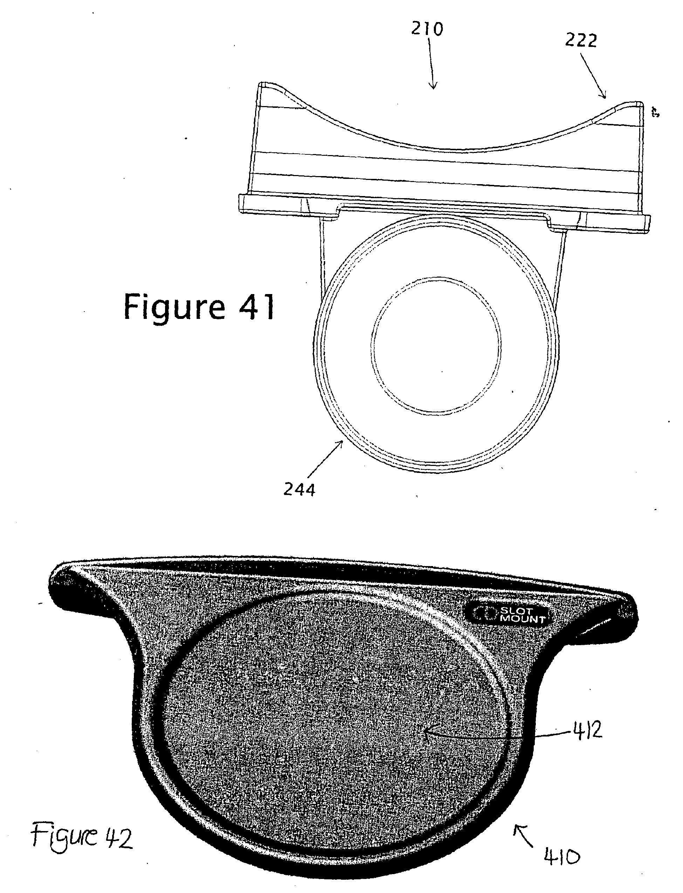

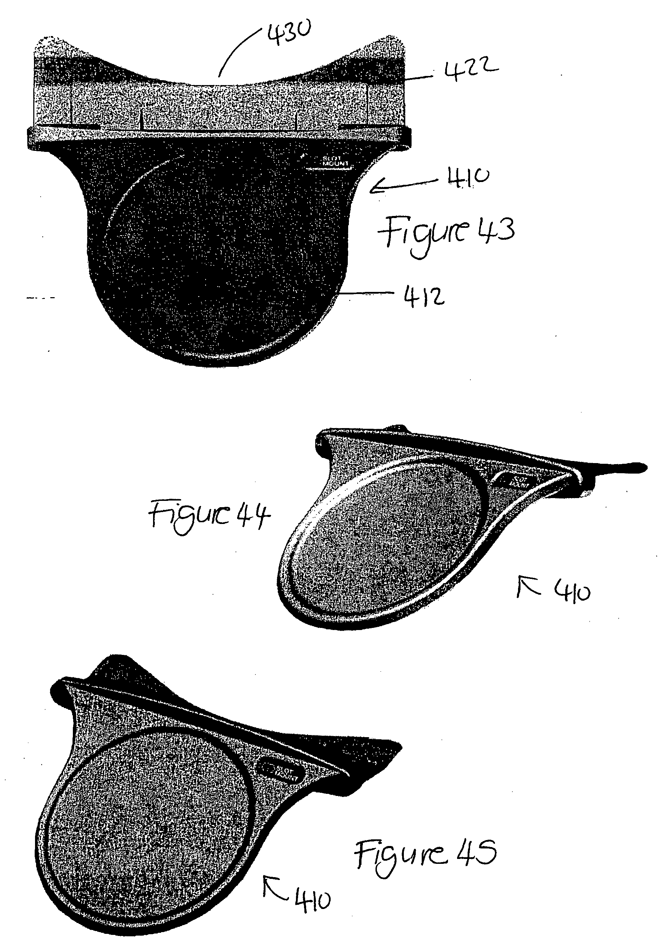

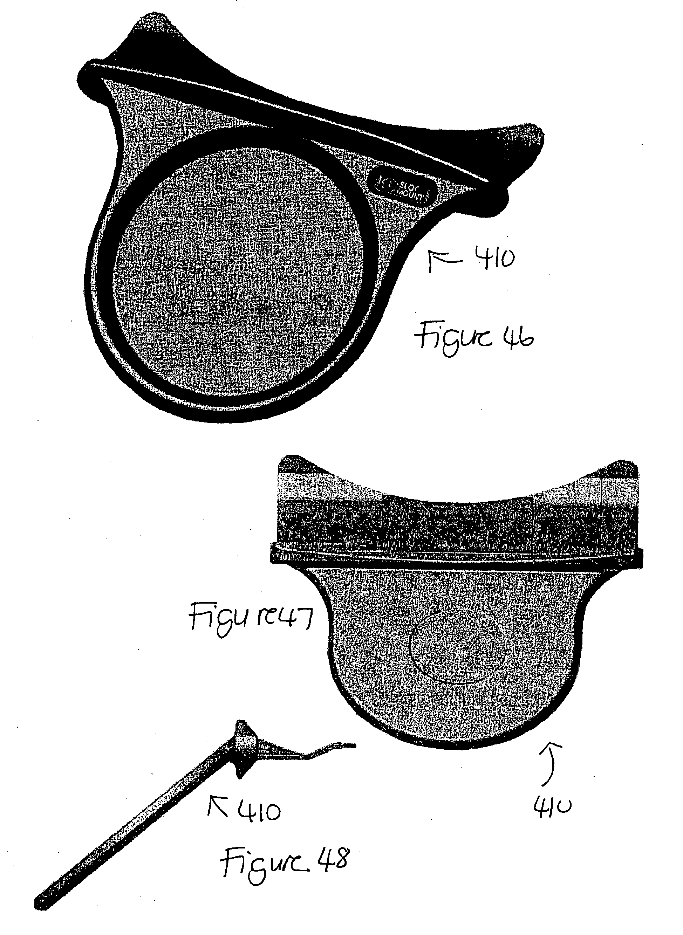

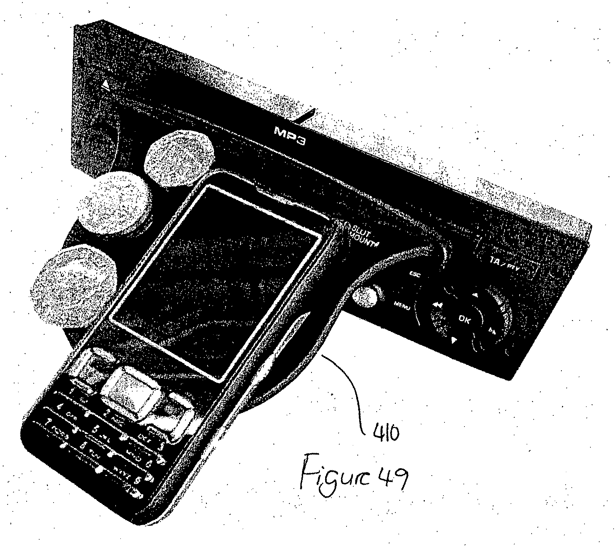

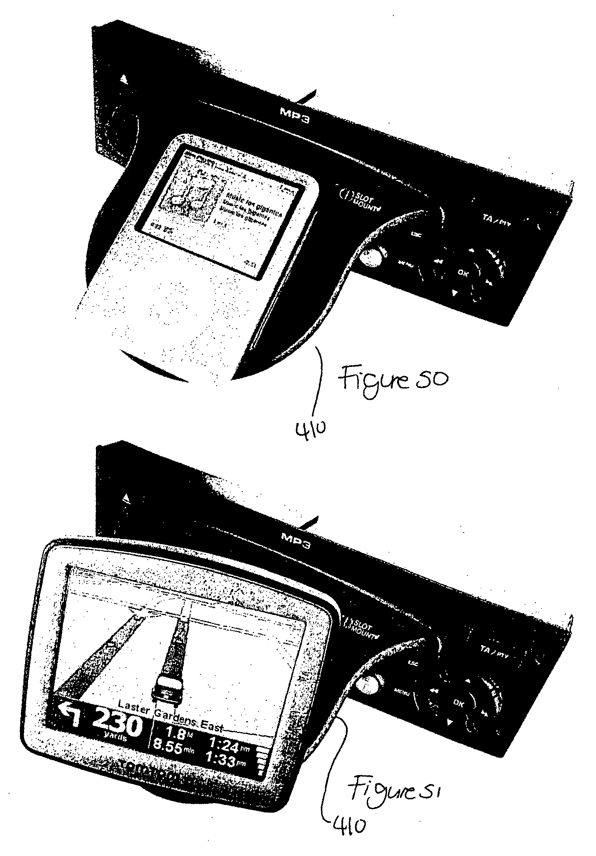

Figures 42 to 51 illustrate a mounting device 410 according to a third embodiment of the present invention from a number of different perspective angles with an example mobile phone, mp3 player and satellite navigation system in situ. The mounting device 410 has a retaining means which is made up of a retaining surface 412. The retaining means as a whole acts to retain an object. The mounting device also has a tongue projection 422. The tongue projection 422 has an arcuate cut away portion 430 which substantially conforms to the arcuate of a CD or DVD. The cut away portion 430 enables the tongue projection 422 to fit into the receiving aperture 32 of a CD or DVD player 34 without protruding too far into the CD or DVD player 34 in the receiving channel 36 so that the tongue does not interfere with the CD or DVD playing station 38 and thus the actual playing of the CD or DVD 40 whilst the mounting device 410 is installed. In this embodiment the retaining surface is at an angle of 45 degrees with respect to the tongue projection.

## Claims

1. A mounting device (10, 110, 210, 310, 410) including a retaining means (12, 112, 212, 312, 412 adapted to retain an object and a mounting means adapted to mount to an entertainment system in a vehicle wherein the mounting means includes a projection and the projection includes a tongue (22, 122, 222, 322, 422) **characterised in that** the tongue in the direction of projection includes a first horizontal portion (24, 124, 224, 324, 424), a second portion (26, 126, 226, 326, 426) which curves below the horizontal portion and a third portion (28, 128, 228, 328, 428) which curves back to the level of the horizontal portion wherein the second and third portions create a wave portion wherein the wave portion is adapted to mount within and be retained within the receiving aperture (32) in a hook like manner.

2. A mounting device as claimed in Claim 1 wherein the entertainment system includes a CD/DVD or cassette player (34) including a CD/DVD or cassette receiving aperture (32), a CD/DVD or cassette receiving channel and a CD/DVD or cassette playing station.

3. A mounting device as claimed in Claim 2 wherein the mounting means is adapted to mount within and be retained within the CD/DVD or cassette receiving aperture.

4. A mounting device as claimed in Claim 3 wherein the mounting means is adapted to extend into the CD/DVD or cassette receiving channel but not into the CD/DVD or cassette playing station.

5. A mounting device as claimed in any preceding claim wherein the retaining means includes an aperture (246), (346).

6. A mounting device as claimed in any preceding claim wherein the retaining means includes a clip.

7. A mounting device as claimed in any preceding claim wherein the retaining means includes a hook and loop fastener system.

8. A mounting device as claimed in any preceding claim wherein the retaining means includes a retaining projection.

9. A mounting device as claimed in any preceding claim wherein the retaining means includes a bracket (14, 16, 114, 116).

10. A mounting device as claimed in any preceding claim wherein the retaining means is adapted to retain a portable satellite navigation unit, mobile phone, mp3 player or the like.

11. A method of manufacturing a mounting device as claimed in any of claims 1 to 10 by injection moulding.

## Patentansprüche

1. Halterungsvorrichtung (10, 110, 210, 310, 410), die eine Halteeinrichtung (12, 112, 212, 312, 412), die zum Halten eines Objektes ausgebildet ist, und eine Befestigungseinrichtung einschließt, die zur Befestigung an einem Unterhaltungssystem in einem Fahrzeug ausgebildet ist, wobei die Befestigungsvorrichtung einen Vorsprung einschließt, und der Vorsprung eine Zunge (22, 122, 222, 322, 422) einschließt, **dadurch gekennzeichnet, dass** die Zunge in Richtung des Vorsprungs einen ersten horizontalen Abschnitt (24, 124, 224, 324, 424), einen zweiten Abschnitt (26, 126, 226, 326, 426), der kurvenförmig unter den horizontalen Abschnitt gebogen ist, und einen dritten Abschnitt (28, 128, 228, 328, 428) einschließt, der kurvenförmig zurück zur Ebene des horizontalen Abschnittes gebogen ist, wobei die zweiten und dritten Abschnitte einen wellenförmigen Abschnitt schaffen, wobei der wellenförmige Abschnitt zur Befestigung in der Aufnahmeöffnung (32) und zum Festhalten in dieser in einer hakenförmigen Weise ausgebildet ist.

2. Halterungsvorrichtung nach Anspruch 1, bei der das Unterhaltungssystem ein CD/DVD- oder Kassetten-Abspielsystem (34) einschließt, das eine CD/DVD- oder Kassetten-Aufnahmeöffnung (32), einen CD/DVD- oder Kassetten-Aufnahmekanal und eine CD/DVD- oder Kassetten-Abspielstation einschließt.

3. Halterungsvorrichtung nach Anspruch 2, bei der die Befestigungseinrichtung zur Befestigung im Inneren der CD/DVD- oder Kassetten-Aufnahmeöffnung und zum Festhalten in dieser ausgebildet ist.

4. Halterungsvorrichtung nach Anspruch 3, bei der die Befestigungseinrichtung so ausgebildet ist, dass sie sich in den CD/DVD- oder Kassetten-Aufnahmekanal, jedoch nicht in die CD/DVD- oder Kassetten-Abspielstation erstreckt.

5. Halterungsvorrichtung nach einem der vorhergehenden Ansprüche, bei der die Halteeinrichtung eine Öffnung (246, 346) einschließt.

6. Halterungsvorrichtung nach einem der vorhergehenden Ansprüche, bei der die Halteeinrichtung eine Klammer einschließt.

7. Halterungsvorrichtung nach einem der vorhergehenden Ansprüche, bei der die Halteeinrichtung ein Haken- und Haltebügel-Befestigungssystem einschließt.

8. Halterungsvorrichtung nach einem der vorhergehenden Ansprüche, bei der die Halteeinrichtung einen Haltevorsprung einschließt.

9. Halterungsvorrichtung nach einem der vorhergehenden Ansprüche, bei der die Halteeinrichtung einen Haltebügel (14, 16, 114, 116) einschließt.

10. Halterungsvorrichtung nach einem der vorhergehenden Ansprüche, bei der die Halteeinrichtung zum Halten einer tragbaren Satelliten-Navigationseinheit, eines Mobiltelefons, eines MP3-Abspielgerätes oder dergleichen ausgebildet ist.

11. Verfahren zur Herstellung einer Halterungsvorrichtung nach einem der Ansprüche 1 bis 10 durch Spritzgießen.

## Revendications

1. Dispositif de montage (10, 110, 210, 310, 410) comprenant un moyen de retenue (12, 112, 212, 312, 412) adapté pour retenir un objet et un moyen de montage adapté pour être monté sur un système audio-vidéo dans un véhicule, dans lequel le moyen de montage comprend une saillie et la saillie comprend une languette (22, 122, 222, 322, 422), **caractérisé en ce que** la languette, dans la direction de la saillie, comprend une première partie horizontale (24, 124, 224, 324, 424), une deuxième partie (26, 126, 226, 326, 426) qui s'incurve au-dessous de la partie horizontale et une troisième partie (28, 128, 228, 328, 428) qui s'incurve à nouveau au niveau de la partie horizontale, dans lequel les deuxième et troisième parties créent une partie ondulée, dans lequel la partie ondulée est adaptée pour être montée à l'intérieur et être retenue à l'intérieur de l'ouverture de réception (32) à la manière d'un crochet.

2. Dispositif de montage selon la revendication 1 dans lequel le système audio-vidéo comprend un lecteur de CD/DVD ou de cassette (34) comprenant une ouverture de réception de CD/DVD ou de cassette (32), un canal de réception de CD/DVD ou de cassette et une station de lecture de CD/DVD ou de cassette.

3. Dispositif de montage selon la revendication 2 dans lequel le moyen de montage est adapté pour être monté à l'intérieur de et être retenu à l'intérieur de l'ouverture de réception de CD/DVD ou de cassette.

4. Dispositif de montage selon la revendication 3 dans lequel le moyen de montage est adapté pour s'étendre dans le canal de réception de CD/DVD ou de cassette mais pas dans la station de lecture de CD/DVD ou de cassette.

5. Dispositif de montage selon l'une quelconque des revendications précédentes dans lequel le moyen de retenue comprend une ouverture (246), (346).

6. Dispositif de montage selon l'une quelconque des revendications précédentes dans lequel le moyen de retenue comprend une attache.

7. Dispositif de montage selon l'une quelconque des revendications précédentes dans lequel le moyen de retenue comprend un système de fixation à velcro.

8. Dispositif de montage selon l'une quelconque des revendications précédentes dans lequel le moyen de retenue comprend une saillie de retenue.

9. Dispositif de montage selon l'une quelconque des revendications précédentes dans lequel le moyen de retenue comprend une console (14, 16, 114, 116).

10. Dispositif de montage selon l'une quelconque des revendications précédentes dans lequel le moyen de retenue est adapté pour retenir une unité de navigation par satellite portable, un téléphone mobile, un lecteur mp3 ou similaire.

11. Procédé pour fabriquer un dispositif de montage selon l'une quelconque des revendications 1 à 10, par moulage par injection.
